# EUROPEAN PATENT APPLICATION

(11) **EP 3 633 181 A1**
(43) Date of publication of application: **08.04.2020**
(21) Application number: 18198277.8
(22) Date of filing: 02.10.2018
(51) Int. Cl.: F02M 55/02, F02M 55/04, F02M 69/46, F16L 55/033, F16L 55/04, F02M 37/00, F16L 55/05

(54) **END PLUG FOR A FUEL RAIL, FUEL RAIL AND METHOD OF FABRICATING A FUEL RAIL FOR AN INTERNAL COMBUSTION ENGINE**

(71) Applicant: Continental Automotive GmbH, 30165 Hannover (DE)
(72) Inventor: Campanella, Paolo, 57121 Livorno (IT); Bartoli, Marco, 57121 Livorno (IT); Matteini, Davide, 57100 Livorno (IT)

(57) **Abstract**

An end plug (12) adapted to be connected to a fuel rail (2) of a fuel injection assembly for an internal combustion engine is provided. The end plug (12) has damping means (10) comprising a resilient element (14) to dampen oscillations in the fuel pressure in the fuel rail (2).

## Description

The present disclosure relates to an end plug for a fuel rail, a fuel rail and a method of fabricating a fuel fail for an internal combustion engine.

Fuel injection assemblies are widely used for injecting fuel into an internal combustion engine. The fuel injection assembly may have a fuel injector for each cylinder of a multi-cylinder engine in which the fuel is supplied to the injectors from a reservoir in the form of a fuel rail, also known as a common rail, comprising an elongate generally tubular member, to which each of the injectors is connected.

Fuel is supplied to the fuel rail by a fuel pump, and the movement of the fuel into, through and out of the fuel rail into the fuel injectors, frequently results in pressure oscillations in the fuel pressure in the fuel rail. Particularly in systems which have uncontrolled variations in the fuel pressure supplied to the individual injectors can occur, as a result of the pressure oscillations in the region of the outlet to the injectors. These pressure variations may have adverse effects on the performance of the injectors which can lead to excessive fuel injection or too little fuel injection with the risk of causing potential damage to the engine.

The present disclosure seeks to provide a solution to this problem.

The present disclosure provides a solution to this problem by providing a fuel injection assembly with a fuel pressure oscillation damping device which is less complex than the known solutions and more cost-effective both in production costs and assembly time.

According to the present disclosure, there is provided a fuel rail for a fuel injection assembly for an internal combustion engine. The fuel rail has a fuel reservoir in the form of an elongate generally tubular member comprising a fuel rail, having a fuel inlet and a plurality of fuel outlets each adapted to be connected to a fuel injector. The fuel rail has a fuel pressure oscillation damping device in the form of a resilient element incorporated in an end plug secured to the fuel rail.

The resilient element is able to damp oscillations in the fuel pressure in the fuel rail. By positioning the damping means in the end plug of the fuel rail, the damping element can be easily included in the fuel rail at the same time as joining the end plug to the elongate generally tubular member of the fuel rail. An improved harmonization of the internal pressure of the fuel rail is provided so as to better control the pressure of the fuel at the injector and better control the combustion process. Emissions can be reduced.

The end plug with the resilient element can be provided as a separate component. The present disclosure also provides an end plug adapted to be connected to a fuel rail of a fuel injection assembly for an internal combustion engine, the end plug having damping means comprising a resilient element to dampen oscillations in the fuel pressure in the fuel rail. An end plug can be secured to one or both ends of the elongate generally tubular member depending on the design of the fuel rail.

The resilient element comes into contact with the fuel in the fuel reservoir in order to dampen oscillations in the pressure of the fuel within the fuel rail. The resilient element may comprise a material that is compatible with the fuel, for example have sufficient corrosion resistance to the fuel. The resilient element may comprise stainless steel for example.

The resilient element can have different forms. In one embodiment, the resilient element is formed by a planar element secured to a spring. The planar element is movable in response to fluctuations in the fuel pressure in the fuel rail, the spring damping out the movement of the disc-like element. The planar element may comprise a substantially rigid disc and may be clamped to the spring. The planar element may comprise stainless steel and the spring may comprise a spring steel. The spring may be a coil spring such as a helical spring.

In an embodiment, the resilient element comprises a resilient membrane secured about its periphery to the end plug, the resilient membrane being responsive and resiliently deforming in response to fuel pressure in the fuel rail and in particular changes in the fuel pressure in the fuel rail to dampen oscillations in the fuel pressure.

The periphery of the resilient membrane may be welded to an interior surface of the end plug.

The resilient membrane may be formed of a metal such as stainless steel. The resilient membrane may have a thickness selected such that the membrane can resiliently deform in response to the fuel pressure.

A fuel rail having a fuel reservoir in the form of an elongate generally tubular member having a fuel inlet and a plurality of fuel outlets each adapted to be connected to a fuel injector is provided. The fuel rail has an end plug in accordance with any one of the embodiments described herein.

In some embodiments, the fuel rail has a single end plug secured to one end of the tubular member. The opposing end of the tubular member provides the fuel inlet.

In some embodiments, the fuel rail comprises two end plugs and the fuel inlet is arranged between the end plugs in a wall of the tubular member. The resilient member included in each end plug may have the same or a different form. For example, each end plug may include a resilient membrane or one end plug may include a resilient member and the second end plug a planar element and spring. The resilient and damping effect provided by the resilient members of the two end plugs may the substantially the same or may vary.

The fuel rail may be used in a low pressure fuel rail assembly in which the fuel has a pressure in the range of 5 to 10 bar, for example. The fuel rail may also be used in a high pressure fuel rail assembly in which the fuel has a pressure of around 200 bar or more.

A method of fabricating a fuel rail or a fuel rail assembly for an internal combustion engine is also provided. The method comprises securing an end plug according anyone of the embodiments described herein to a an elongate generally tubular member having a fuel inlet and a plurality of fuel outlets each adapted to be connected to a fuel injector.

The end plug may be secured to the tubular member by welding or brazing.

In some embodiments, one end plug is secured to both ends of the tubular member.

Embodiments of the disclosure will now be described by way of example with reference to the accompanying drawings in which:
- Figure 1: illustrates a fuel rail,
- Figure 2: illustrates a sectional side view of part of a fuel rail with an end plug according to a first embodiment,
- Figure 3: illustrates a sectional side view of a fuel rail with an end plug according to a second embodiment,
- Figure 4: illustrates a perspective sectional view of a fuel rail incorporating the end plug of Figure 2 at each end of the rail, and
- Figure 5: illustrates a perspective sectional view of a fuel rail incorporating the end plug of Figure 3 at each end of the rail.

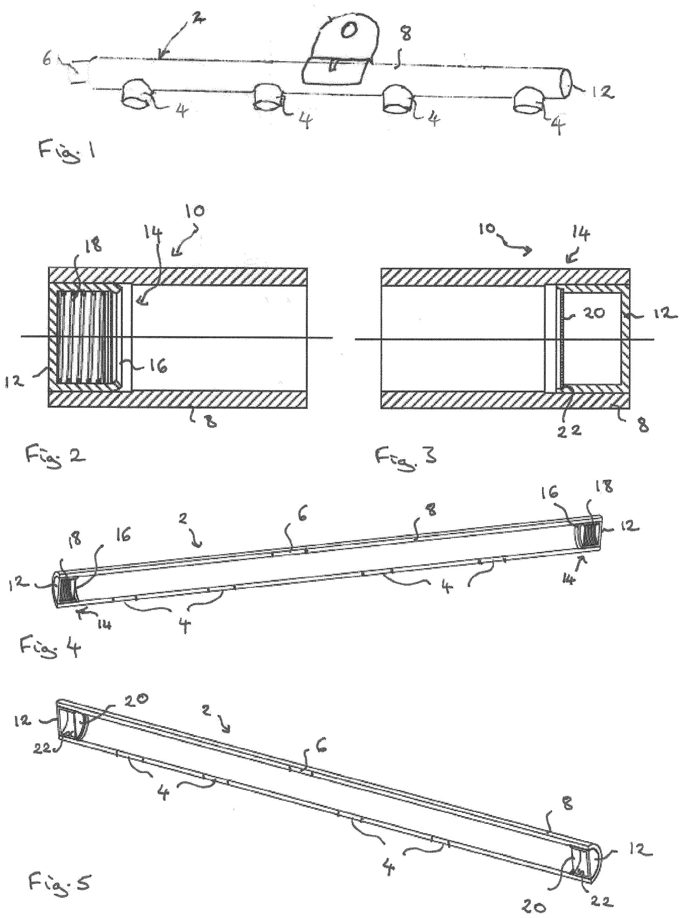

Referring now to Figure 1, there is shown a fuel rail assembly having a fuel rail tube 2 in the form of an elongate generally tubular member 8 having four fuel outlets 4 and a fuel inlet 6. A fuel injector, not illustrated in Figure 1, is secured to each of the fuel outlets. In other embodiments, the fuel rail may include fewer or more than fuel outlets. The fuel rail 2 incorporates a damping device to damp out pressure oscillations in the fuel in the fuel rail 2. The damping device 10 is positioned in the vicinity of an end plug 12 secured to the elongate tubular member 8. The damping device 10 may be positioned in and, in some embodiments, secured within the end plug 12. The damping device 10 includes a resilient member 14 for damping pressure oscillations in the fuel rail 2 to which the end plug 12 is secured.

The resilient member 14 may have different forms. Figures 2 and 4 illustrate a first embodiment and Figures 3 and 5 a second embodiment of a fuel rail 2 with an end plug 12 incorporating a resilient member 14.

Referring now to Figures 2 and 4, there is shown a damping device 10 for damping pressure oscillations in the fuel rail 2 to which the end plug 12 is secured. In the first embodiment illustrated in figures 2 and 4, the resilient member 14 comprises a planar disc-like member 16 that is mechanically coupled with a coil spring 18. The planar member 16 is responsive to oscillations of the pressure of the fuel in the fuel rail 2 and is able to move relative to the fuel rail 2, in particular relative to the tubular member 8, against the resilient movement of the coil spring 18 to absorb or damp oscillations in the fuel pressure. The planar member 16 may be formed of a metal such as stainless steel and the coil spring 18 may be formed of a spring steel. The planar member 16 may be clamped to the coil spring 18.

Referring now to Figures 3 and 5, there is shown an alternative embodiment of the damping device 10 which incorporates a resilient membrane 20. The resilient membrane 20 is formed of a thin sheet of metal such as stainless steel which is secured about its periphery to an interior surface 22 of the end plug 12. The membrane 20 is in itself resilient and is responsive to oscillations in the pressure of the fuel in the fuel rail 2. Thus, the resilient movement of the membrane material 20 serves to absorb pressure oscillations in the fuel in the fuel rail 2.

Referring now to Figure 4, there is shown a schematic perspective view of a fuel rail 2 incorporating an end plug 12 with an internal damping device 10 in accordance with the embodiment shown in Figure 2 at each end of the fuel rail 2.

Figure 5 shows a schematic perspective view of a fuel rail 2 having an alternative arrangement which incorporates an internal damping device 10 in accordance with the embodiment shown in Figure 3 at each end of the fuel rail 2.

Each end of the fuel rail is closed by an end plug 12, each of which incorporates a damping device 10. In some embodiments, the form of the damping device 10 included at each end of the fuel rail is different. In an alternative arrangement, a damping device 10 is provided at one end only of the tubular member 8 of the fuel rail 2, a fuel inlet 6 being located at the other end of the tubular member 8.

The end plug may be secured to the tubular member 8 by welding for example.

Although described as an end plug 12, a plug according to the present disclosure incorporating a damping device may be incorporated in a fuel rail intermediate its length.

By incorporating the damping device 10 in the end plug 12, a very cost-effective solution is provided as no additional component is necessary, and no extra assembly time is required in the assembly of the fuel rail installation with a consequent saving in material and assembly time costs.

### Reference list

- 2: Fuel rail
- 4: Fuel outlet
- 6: Fuel inlet
- 8: Tubular member
- 10: Damping device
- 12: End plug
- 14: Resilient element
- 16: Planar element
- 18: Coil spring
- 20: Membrane
- 22: Interior surface

## Claims

1. An end plug (12) adapted to be connected to a fuel rail (2) of a fuel injection assembly for an internal combustion engine, the end plug (12) having damping means (10) comprising a resilient element (14) to dampen oscillations in the fuel pressure in the fuel rail (2).

2. An end plug (12) according to claim 1, wherein the resilient element (14) is formed by a planar element (16) secured to a spring (18).

3. An end plug (12) according to claim 2, wherein the planar element (16) comprises a substantially rigid disc.

4. An end plug (12) according to claim 2 or claim 3, wherein the planar element (16) is formed of stainless steel and the spring is formed of spring steel.

5. An end plug (12) according to one of claims 2 to 4, wherein the planar element (16) is clamped to the spring (18).

6. An end plug (12) according to one of claims 2 to 5, wherein the resilient element is slidably engaged with an interior surface of the end plug.

7. An end plug (12) according to claim 1, wherein the resilient element (14) comprises a resilient membrane (20) secured about its periphery to the end plug (12).

8. An end plug (12) according to claim 7, wherein resilient membrane (20) is welded to an interior surface of the end plug (12) about its periphery.

9. An end plug (12) according to claim 7 or claim 8, wherein the resilient membrane (20) is formed of a metal such as stainless steel.

10. A fuel rail (2) for a fuel rail assembly for an internal combustion engine, the fuel rail (2) comprising a fuel reservoir in the form of an elongate generally tubular member (8) having a fuel inlet (6) and a plurality of fuel outlets (4) each adapted to be connected to a fuel injector, the fuel rail (2) having an end plug (12) in accordance with any one or more of claims 1 to 9.

11. A fuel rail (2) according to claim 10, wherein the fuel rail (2) comprises two end plugs (12) and the fuel inlet (6) is arranged between the end plugs (12) in a wall of the tubular member (8).

12. A method of fabricating a fuel rail (2) for a fuel rail assembly for an internal combustion engine, the method comprising:
securing an end plug (12) according to one of claims 1 to 9 to an elongate generally tubular member (8) having a fuel inlet and a plurality of fuel outlets (4) each adapted to be connected to a fuel injector (6).

13. A method according to claim 12, wherein the end plug (12) is secured to the tubular member (8) by welding or brazing.

14. A method according to claim 12 or claim 13, wherein one end plug (12) is secured to both ends of the tubular member (8) .
